# EUROPEAN PATENT APPLICATION

(11) **EP 1 030 265 A2**
(43) Date of publication of application: **23.08.2000**
(21) Application number: 99118260.1
(22) Date of filing: 14.09.1999
(51) Int. Cl.: G06K 15/12

(54) **Controlling the scan line length of laser printers**

(30) Priority: 17.02.1999 US 251716
(71) Applicant: Hewlett-Packard Company, Palo Alto, California 94304 (US)
(72) Inventor: Carlson, Gerard J., Boise, ID 83709 (US)
(74) Representative: Schoppe, Fritz, Dipl.-Ing.

(57) **Abstract**

A laser scanning device has a laser unit (52, 54, 56, 58) that converts a pixel data stream into a laser beam that can be scanned along a scan line on a photoconductor unit. The laser scanning device also has a space insertion/deletion unit (60 or 62) that adjusts the length of the scan line by either deleting or inserting delays in the pixel data stream.

## Description

### TECHNICAL FIELD

This invention relates to laser scanning devices, such as those used in laser printers. More particularly, the invention relates to systems and methods for controlling scan line length in laser scanning devices.

### BACKGROUND

Conventional color laser printers print four different color planes (e.g., cyan, yellow, magenta, and black, or "CYMK") to produce a colored print. Early color lasers, known as "sequential" color printers, employed one laser-photoconductor developer system and successively printed each color plane. That is, the same laser unit wrote data onto the same photoconductor unit at four different times, one for each CYMK color plane. Sequential color printers had the benefit that the four color planes were always the same size because the same mechanism wrote each plane.

More modern printers use four laser-photoconductor developer systems to simultaneously expose and develop the four CYMK color planes. These printers, known as "inline" color printers, significantly increased printing speed by as much as four times in comparison to "sequential" printers. The increased speed came at the expense of increased complexity and additional plane-to-plane interactions that must be managed to maintain print quality. Some of the major interactions are controlled by the following parameters:
A) Color plane starting position in the X direction
B) Color plane starting position in the Y direction
C) Rotational errors in color plane direction (skew)
D) Size variation from color plane to color plane.

These four sources of error (as well as others not listed) need to be controlled to align the four color planes in an inline printer. Improperly aligned color planes degrade print quality and produce artifacts similar to a poorly adjusted color TV or a badly printed copy of color newspaper comics. Fringing of colors and poorly defined edges are examples of such undesirable artifacts.

The present invention is particularly directed to solving problem D. Since there are four lasers writing data onto four separate photoconductor units, each plane almost inevitably differs in size from the other three, albeit slightly, due to the stack up of mechanical tolerances in the laser units, the photoconductor units, and the chassis that holds them. A printer with different plane sizes prints images that cannot be converged. There is always a color halo somewhere in the printed image and such halos detract greatly from the print quality of the printed image.

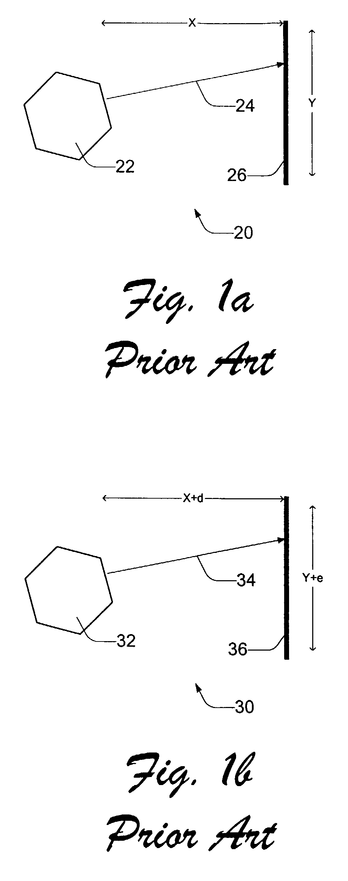

Figs. 1a and 1b illustrates how different laser photoconductor units print different plane sizes. Fig. 1a shows a laser scanner 20 having a scanner 22 that directs a laser beam 24 onto the photoconductor unit 26. Scanner 22 has a rotating mirror (e.g., illustrated as a hexagonal mirror) located a distance X from the photoconductor unit 26. Scanner 22 produces a scan line on the photoconductor unit 26 of width Y.

Similarly, Fig. 1b shows a laser scanner 30 having a scanner 32 that directs a laser beam 34 onto the photoconductor unit 36. Due to mechanical differences, scanner 32 has a rotating mirror located a distance X+d from the photoconductor unit 36. As a result, scanner 32 draws a scan line on the photoconductor unit 36 of width Y+e, where "e" is the error offset as compared to the width Y of the first laser unit. Accordingly, using different laser scanners inherently yields different size color planes. Note that this does not happen in a sequential color laser printer because the same scanner and photoconductor are used to write each color plane.

Prior solutions to the plane size problem involve two main steps:
1) Measure the error of the printed scan line.
2) Correct the error by one of the following means:
   a) Mechanically adjust the laser to photoconductor spacing;
   b) Increase or decrease the laser writing frequency to narrow or widen the printed scan line.

Method (2)(a) has a disadvantage in that it requires manual adjustment or motor controlled adjustments for automatic calibration. This is expensive and hence, not very practical nor widely used.

Method (2)(b) is preferred over method (2)(a) because the laser writing frequency can be more easily controlled electronically and thus the errors can be corrected automatically during a periodic calibration cycle. Electronic control of laser writing frequency is commonly implemented using frequency synthesis via phase locked loops (PLLs). PLLs are a classic way of synthesizing frequencies, but they have several disadvantages:
1) PLLs are relatively expensive.
2) PLLs are a mixed signal (analog and digital) art and are therefore more specialized.
3) PLLs are more noise sensitive than pure digital logic.

Accordingly, there remains a need to control the size of the four color planes despite the various mechanical differences in the laser, photoconductor, and other related mechanical systems in an inline laser color printer, without using expensive mechanical adjustments or PLL-based electronic control of laser writing frequency.

### SUMMARY

This invention concerns laser scanning devices, such as those employed in color laser printers. The invention further concerns methods for controlling the scan line length of laser scanning devices.

In the described implementation, the laser scanning device writes a pixel data stream at a laser writing frequency and converts it into a laser beam that is scanned along a scan line. The laser scanning device adjusts the laser writing frequency by deleting or inserting small delays into the pixel data stream of the laser beam. Inserting a small delay has the effect of decreasing the laser writing frequency and thus widening the printed scan line. Conversely deleting a portion of the printed image has the effect of increasing the laser writing frequency and thus shortening the printed scan line. The small delays are added along the entire length of a scan line to spread small gaps resulting in the laser output data, thereby making the gaps less visible to the eye.

### BRIEF DESCRIPTION OF THE DRAWINGS

Figs. 1a and 1b show two laser units employed in a conventional inline color laser printer to illustrate how different laser units print different plane sizes.

Fig. 2 is a diagrammatic illustration of an inline color laser printer.

Fig. 3 shows four rows of dots printed by the laser printer, with three rows extended by a width of one dot in comparison to the top row and with the one dot width being placed in the same column.

Fig. 4 shows four rows of dots printed by the laser printer, with three rows extended by a width of one dot in comparison to the top row and with the one dot width being distributed in fourths in the same four columns of the scan line.

Fig. 5 shows four rows of dots printed by the laser printer, with three rows extended by a width of one dot in comparison to the top row and with the one dot width being distributed in fourths in the different columns across the scan line.

Fig. 6 is a block diagram of a space insertion/deletion unit employed in the color laser printer.

Fig. 7 is a timing diagram showing operation of the space insertion/deletion unit to insert spaces.

Fig. 8 is a state diagram of a dot insertion/deletion state machine employed in the space insertion/deletion unit.

Fig. 9 is a block diagram of an insertion lookup table used by the space insertion/deletion unit according to one implementation.

Fig. 10 is a block diagram of a random insert signal generator used by the space insertion/deletion unit according to another implementation.

The same reference numbers are used throughout the figures to reference like components and features.

### DETAILED DESCRIPTION

This invention concerns laser scanning devices, such as those used in laser printers, and to methods for controlling the scan line length of the laser scanning devices. More specifically, techniques implemented under this invention enable adjustment of the laser writing frequency by deleting or inserting small delays into the pixel stream of the laser beam. Inserting a small delay (e.g., one pixel or less in duration) has the effect of decreasing the laser writing frequency and thus widening the printed scan line. Conversely deleting a portion (e.g., one pixel or less at a time) of the printed image has the effect of increasing the laser writing frequency and thus shortening the printed scan line.

The invention is described in the context of an inline color laser printer. By increasing or decreasing the laser writing frequency, an inline color laser printer is able to control the size of the four color planes despite the various mechanical differences in the laser, photoconductor, and other related mechanical systems. It is noted, however, that the invention may be implemented in other contexts, such as monochrome laser printers, scanners, photocopiers, facsimile machines, and so forth.

### General System

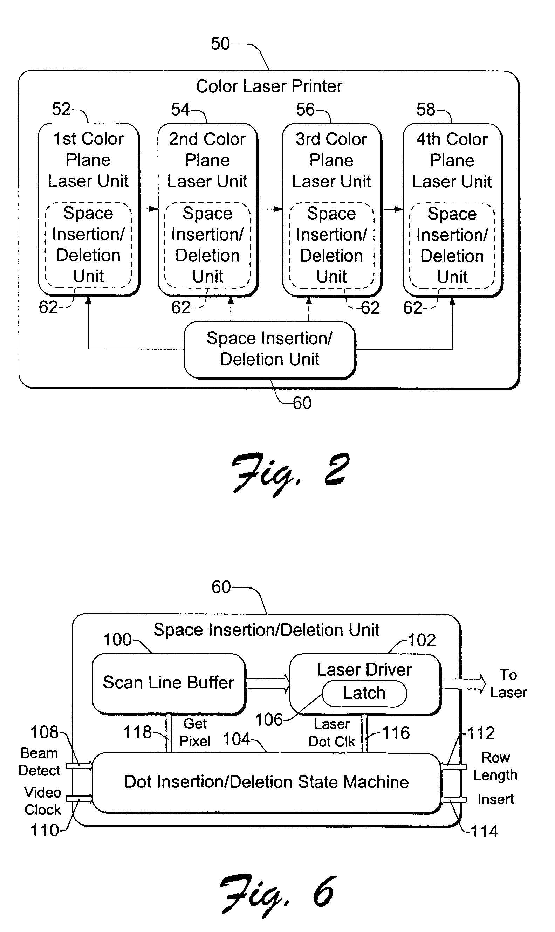

Fig. 2 shows an inline color laser printer 50 having four laser units 52, 54, 56, and 58 that simultaneously expose and develop four color planes (e.g., CYMK). Inline laser printer 50 also has a space insertion/deletion unit 60 to selectively insert or delete small delays into the pixel stream of the laser beam to cause insertion or deletion of spaces in the printed dot pattern. Alternatively, each laser unit 52-58 may be equipped with its own space insertion/deletion unit, as represented by the dashed boxes 62.

To illustrate how the space insertion/deletion unit 60 (or 62) works, suppose the unit desires to (1) decrease the laser writing frequency and widen the printed scan line by inserting one dot width into the scan line or (2) increase the laser writing frequency and shorten the printed scan line by deleting one dot width from the scan line. There are a number of ways to do this. One approach is to simply insert or delete a whole dot delay somewhere in the pixel stream. Unfortunately, this approach may lead to undesirable visible artifacts.

A second approach, which reduces such artifacts, is to insert or delete multiple partial pixels in the stream and spread them over the entire scan line. A third approach, which is perhaps even better at reducing visible artifacts, is to add randomness to the placement of the inserted or deleted partial pixels to avoid creating a visual line perpendicular or angled to the scanning direction.

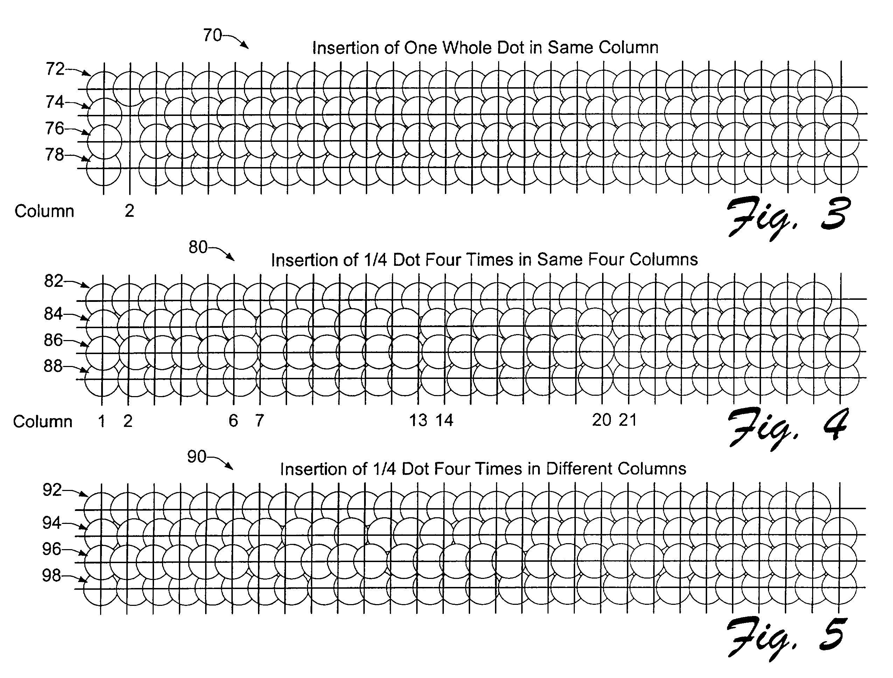

Figs. 3-5 show a printed output resulting from the three different insertion/deletion approaches. For discussion purposes, these figures show the insertion case in which small sub pixel delays are added to the laser data stream. Deletion of pixel spaces follows essentially the same principles, but results in a squeezing of the dots rather than an expansion.

In Figs. 3-5, the three shorter scan lines of the four planes are lengthened to match the length of the longest scan line. That is, the insertion/deletion unit 60 (Fig. 2) determines which laser unit 52-58 has the longest scan line and then adjusts the scan lines of the other three laser units. All three figures assume that a row of 28 dots needs to be lengthened to 29 dots. The first row in each figure shows 28 dots printed along a scan line that is 28 dots wide. The remaining three rows are expanded to a scan line of 29 dots wide.

Fig. 3 shows the case in which a printed output 70 has one whole dot width added at one column in the scan line. The printed output 70 has four rows 72, 74, 76, and 78. Row 72 has 28 dots printed along a scan line. Rows 74, 76, and 78 also have 28 dots, but include an empty dot space inserted at column two to expand each row to 29 dots. While this approach widens the line, it introduces a noticeable gap at column two, which results in an objectionably visible artifact in the printed output 70.

Fig. 4 shows the case in which a printed output 80 has a one-dot gap divided into four smaller gaps of one-fourth dot each and distributed in the same four places along the scan line. The printed output 80 has four rows 82, 84, 86, and 88. Row 82 has 28 dots printed along a scan line and rows 84, 86, and 88 have 28 dots, but are expanded by four smaller gaps of one-fourth dot each. The partial dot spaces are placed between columns 1 and 2, columns 6 and 7, columns 13 and 14, and columns 20 and 21. The inserted gaps are still visible, but less noticeable in comparison to the whole dot artifact in Fig. 3.

Fig. 5 shows the case in which a printed output 90 has a one-dot gap divided into four smaller gaps of one-fourth dot each and spread randomly over the entire scan line. The printed output 90 has four rows 92, 94, 96, and 98. Row 92 contains 28 dots printed along a scan line. Rows 94, 96, and 98 also have 28 dots, but are expanded by four smaller gaps of one-fourth dot each. The gaps are randomly distributed from row to row so that no one gap in any row abuts another gap in a neighboring row. This random distribution goes the furthest toward minimizing the visual artifacts introduced by adding spaces because the gaps do not line up vertically as in Figs. 3 and 4.

### Space Insertion/Deletion Unit

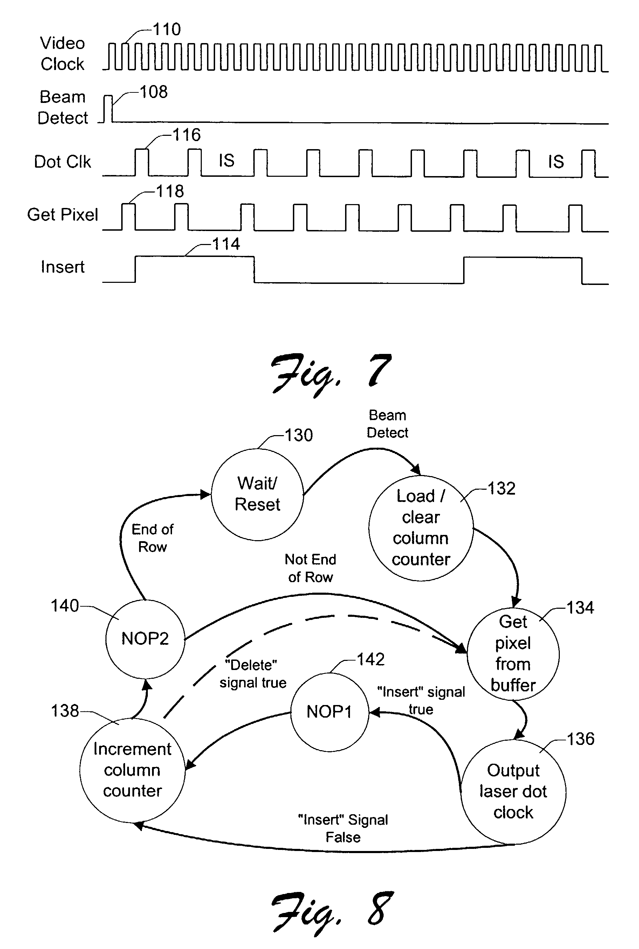

Fig. 6 shows space insertion/deletion unit 60 in more detail. It includes a scan line buffer 100, a laser driver 102, and a dot insertion/deletion state machine 104. The scan line buffer 100 holds data to be printed. The scan line buffer 100 can be a one-bit per pixel buffer or a multi-bit per pixel buffer, depending upon the configuration of the laser driver 102. For instance, in some implementations, the scan line buffer 100 may send eight bits per pixel to control the laser driver delay, pulse width, drive current, or other parameters.

The laser driver 102 is configured with a one pixel latch 106. The laser driver can be a one-bit per pixel (binary) laser driver or a pulse width modulator (PWM) to provide one of several levels of gray scale to each pixel. Other possible variations may include PWMs that control the position of the pulse within the pixel. Many variations are possible.

The dot insertion/deletion state machine 104 is responsible for inserting or deleting spaces in the scan line to adjust the writing frequency and control the scan line length. The state machine 104 receives several inputs, including a beam detect 108, a video clock 110, a row length 112, and an insert signal 114. The state machine 104 outputs a "laser dot clock" signal 116 to the laser driver 102 and a "get pixel" signal 118 to the scan line buffer 100.

Fig. 7 shows an exemplary timing diagram of the various signals input to, and output from, the dot insertion/deletion state machine 104. Video clock 110 is a clock signal that drives the dot insertion/deletion state machine 104. Beam detect 108 is a signal that occurs once per scan line and indicates the beginning of each scan line. At or shortly after beam detect, the laser begins data output.

Laser dot clock 116 is a signal that is input to the laser driver 102 to send one pixel of data (i.e., one dot) to the laser for printing. Laser dot clock 116 is triggered at a predefined multiple of the video clock 110. In this example, the video clock 110 is four times the laser dot clock 116. At a resolution of 600 dot per inch (dpi), a printer capable of printing an 8.5" x 11" page at 30 pages per minute (PPM) has a laser dot clock rate of 16.830 MHz (i.e., 600 vertical dpi x horizontal 600 dpi x 11 inches x 8.5 inches x 30 PPM / 60 sec/min = 16.830 MHZ). In this example, issues of margins and spacing between pages has been ignored for simplicity.

The "get pixel" signal 118 is input to the scan line buffer 100 to trigger when the buffer 100 outputs a next pixel to the laser driver 102.

The "insert" signal 114 controls when the state machine 104 inserts a full or partial space. It can be generated in a number of ways. Two different means for generating the insert signal 114 are through use of a look up table or a pseudo-random number generator. These techniques are discussed below in more detail with reference to Figs. 9 and 10.

The "row length" signal 112 (not shown in Fig. 7) is a configuration parameter that presets a counter inside the state machine 104. The state machine 104 outputs the number of laser dot clocks equal to the row length.

Each laser unit can deposit a "dot" in many ways, such as a single uniform pulse to the laser, or a pulse of variable width, or a variable power drive signal to the laser, or other types of control. The common understanding of a "dot" is that it corresponds to the nominal resolution of the printer, such as 600 dots per inch. According to this invention, dot density is slightly varied to precisely control the length of a scan line.

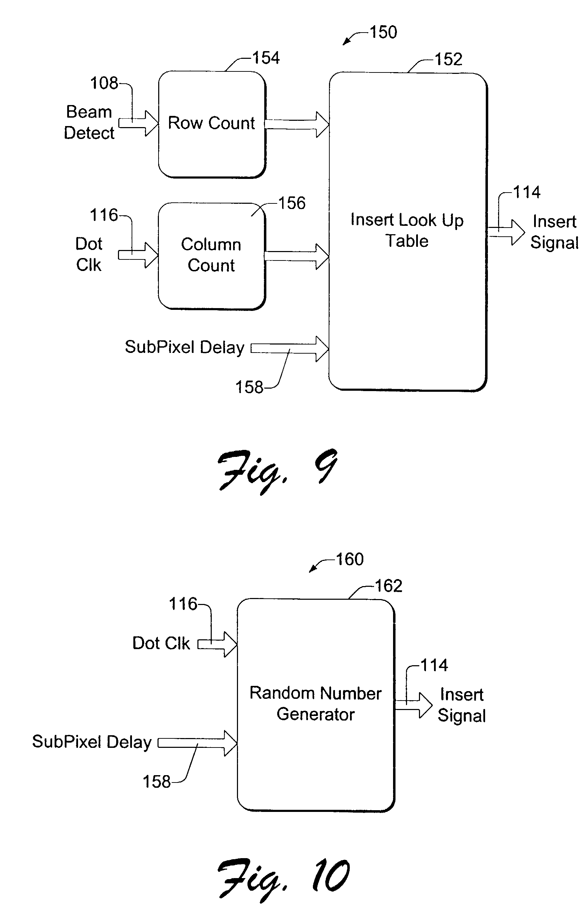

Fig. 8 shows an exemplary configuration of the dot insertion/deletion state machine 104. The video clock 110 runs the state machine. The state machine starts in the wait/reset state 130. When a beam detect signal 108 is received, indicating the start of a scan line, the state machine reloads its column counter (state 132) with the row length parameter received previously as signal 112. The state machine then loads the first pixel from the scan line buffer and sends it to the laser driver (state 134).

With the video clock 110 at four times the laser dot clock 116, each state transition in the machine 104 takes place in one-fourth dot time. In normal operation, the state machine cyclically proceeds through the following four states:
State 134: Get pixel from scan line buffer 100.
State 136: Output laser dot clock signal 116.
State 138: Increment column counter.
State 140: No Operation 2 (NOP2)

With this cycle, the laser dot clock 116 is generated every fourth pulse of the video clock, which is the proper rate for the printer. It is noted that other video clock rates of 2X, 3X, ..., nX, and so forth, may be used to run the state machine. In such cases, the state machine 104 is designed to cycle through "n" states per laser dot clock to generate the appropriate laser dot clock frequency.

When the state machine receives an insert signal 114 indicating that a space should be inserted, the state machine 104 transitions through a fifth state 142, which is a no operation (NOP1). This allows one more tick of the video clock 110 before outputting the next laser dot clock 116 at state 136. As a result, the duration between consecutive dot clock pulses is lengthened by the period of one video clock pulse, as indicated by the "IS" (i.e., "inserted space") in dot clock signal 116 in Fig. 7. The five steps in this cycle are shown below:
State 134: Get pixel from scan line buffer 100.
State 136: Output laser dot clock signal 116.
State 142: No Operation 1 (NOP1).
State 138: Increment column counter.
State 140: No Operation 2 (NOP2)

Higher values of the clock multiple "n" result in finer dot placement adjustment. For example if n = 8, one-eighth dot spacing is inserted in the video stream to lengthen the scan line. Higher values of n require a higher video frequency, but allow smaller spaces to be inserted into the scan line, thus further reducing the possibility of visual artifacts in the printed output.

Figs. 9 and 10 show two different mechanisms for generating the insert signal to cause the state machine 104 to insert a space into the pixel data stream. As shown in Figs. 3-5, the insert signal triggers the insertion of each of the one-fourth dot spaces used to stretch the rows to 29 dots wide.

In Fig. 9, an insertion mechanism 150 includes a look up table 152, a row counter 154, and a column counter 156. The row counter 154 tracks the number of rows and is incremented upon receipt of each beam detect signal 108. The column counter 156 tracks the number of columns and is incremented upon receipt of each laser dot clock 116.

Look up table 152 receives the following inputs: (1) a signal 158 to dictate the number of dots of space required (e.g., 0 to 60 dots); (2) current dot row being printed as indicated by the row counter 154; and (3) current column being printed as indicated by the column counter 156. These three inputs determine when the dot insertion state machine will insert an extra fractional dot delay into the laser dot clock. The look up table 152 outputs the insert signal 114 that specifies whether or not to insert the subpixel space at the current laser scanner location.

As one exemplary construction, the table is formed in memory (e.g., ROM), counters, combinational logic, or a combination of these. Adequate results can be obtained with a simpler table by using only the lower bits of the column count and introducing some periodicity into the space insertion. Although this would reduce the randomness of the space insertion, a periodicity of eight or more rows would escape detection by the human vision system.

In Fig. 10, an insertion mechanism 160 is configured as a random number generator 162. It receives two inputs: the laser dot clock 116 and the subpixel delay 158. Based on these inputs, the random number generator 162 determines where to place a fractional dot space by randomly inserting the proper number of fifth states to lengthen the scan line accordingly. For example, the subpixel delay signal 158 could program the random number generator to randomly output one insertion signal for every so many ticks of the laser dot clock 116.

Suppose, for example, that a printer prints across a page eleven inches wide at 600 dots per inch. This yields 6,600 dots. If a dot row needs to be stretched out 0.1 inch, sixty dots (i.e., 0.1 inch x 600 dpi) need to be inserted. lf fractional dots of one-fourth dot are inserted, this implies 240 insertions (i.e., 4 insertions per 60 dots) or one insertion every 27.5 dots (i.e., 6,600 dots/240 insertions). Thus, a random number generator can be set to randomly produce an insert signal that randomly inserts four one-quarter dot spaces into every set of 27 dots. This would distribute the space evenly over the entire row of 6,600 dots, yet randomize the placement of the inserted spaces.

The above discussion focuses on insertion of a space into the pixel stream. Deletion of a pixel or subpixel space is essentially the same, except that the state machine deletes a space to shorten the scan line length rather than inserting a space to lengthen the scan line length. Deletion is achieved by removing one or more video clock pulses in a cycle to shorten the duration between consecutive laser dot clock pulses. Such a state machine may be constructed with a NOP state that is selectively bypassed each time the state machine receives a "delete" signal. For example, with reference to Fig. 8, suppose the state machine normally follows through a four-state cycle, as follows:
State 134: Get pixel from scan line buffer.
State 136: Output laser dot clock signal.
State 138: Increment column counter.
State 140: No Operation 2.

Upon receipt of a "delete" signal, the state machine bypasses the fourth state (NOP2), thereby reducing the normal cycle between laser dot clock pulses from four video clock ticks to three video clock ticks, as follows.
State 134: Get pixel from scan line buffer.
State 136: Output laser dot clock signal.
State 138: Increment column counter.

### Conclusion

The present invention is advantageous over prior art solutions in that it is less expensive and does not require mixed signal (analog and digital) technology. In addition, the invention is less sensitive to electrical noise found in digital electronics, and uses more readily available IC processes. It requires less design expertise than mixed signal ASICs, and does not require external filters or components like PLLs. Furthermore, several copies of the circuit implementing the invention can be placed on the same die, combined more easily with other IC electronics, and share die space.

Although the invention has been described in language specific to structural features and/or methodological steps, it is to be understood that the invention defined in the appended claims is not necessarily limited to the specific features or steps described. Rather, the specific features and steps are disclosed as preferred forms of implementing the claimed invention.

## Claims

1. A method for modifying scan line length in a laser scanning device, comprising:
producing a laser beam from a pixel data stream at a laser writing frequency; and
adjusting the laser writing frequency by one of deleting or inserting delays into the pixel data stream.

2. A method as recited in claim 1, wherein adjusting comprises periodically adjusting the laser writing frequency multiple times during each scan line.

3. A method as recited in claim 1, wherein adjusting comprises randomly adjusting the laser writing frequency multiple times during each scan line.

4. A laser scanning device, comprising:
a laser unit (52, 54, 56, 58) to produce a scan line from a pixel data stream; and
a space insertion/deletion unit (60 or 62) coupled to adjust a length of the scan line by one of deleting or inserting delays into the pixel data stream.

5. A laser scanning device as recited in claim 4, wherein the space insertion/deletion unit (60 or 62) randomly deletes or inserts delays into the pixel data stream.

6. A laser scanning device as recited in claim 4, wherein the space insertion/deletion unit (60 or 62) periodically deletes or inserts delays into the pixel data stream.

7. A laser scanning device as recited in claim 4, wherein the space insertion/deletion unit (60 or 62) comprises a state machine (104)that receives a series of first clock pulses and outputs a series of second clock pluses so that there is one second clock pulse every "n" first clock pulses, where "n" is an integer, the state machine adjusting a number of the first clock pulses between consecutive second clock pulses to adjust a frequency at which the second clock pulses are output.

8. A laser scanning device as recited in claim 4, wherein the space insertion/deletion unit (60 or 62) adjusts the length of the scan line upon receipt of a signal, and further comprising a random number generator to generate the signal.

9. A laser scanning device as recited in claim 4, wherein the space insertion/deletion unit (60 or 62) adjusts the length of the scan line upon receipt of a signal, and further comprising a look up table to output the signal.

10. A printer comprising the laser scanning device as recited in claim 4.
